# EUROPEAN PATENT APPLICATION

(11) **EP 2 955 674 A1**
(43) Date of publication of application: **16.12.2015**
(21) Application number: 15171085.2
(22) Date of filing: 09.06.2015
(51) Int. Cl.: G06Q 10/08

(54) **INVENTORY MANAGEMENT APPARATUS AND METHOD**

(30) Priority: 12.06.2014 KR 20140071128; 19.09.2014 KR 20140125282
(71) Applicant: Samsung Electro-Mechanics Co., Ltd., Gyeonggi-do (KR)
(72) Inventor: LEE, Hyun Suk, Gyeonggi-do (KR); JEONG, Yong Jin, Gyeonggi-do (KR); CHO, Sang Do, Gyeonggi-do (KR)
(74) Representative: Grünecker Patent- und Rechtsanwälte PartG mbB

(57) **Abstract**

An inventory management method for managing warehouse inventory and in-store inventory in real time. An inventory management apparatus is able to calculate inventory based on received inventory information and identification information of small electronic labels assigned to products. By generating an image frame, which includes the inventory information, and transmitting the image frame through a gateway to an electronic label, the inventory management apparatus allows the electronic label to display the image frame. The inventory management method and apparatus allows a location of a product to be informed in real time, so that a product ready to be run out inside a store may be replenished immediately.

## Description

### CROSS-REFERENCE TO RELATED APPLICATION(S)

This application claims priority from Korean Patent Application Nos. 10-2014-0071128, filed on June 12, 2014, and 10-2014-0125282, filed on September 19, 2014, in the Korean Intellectual Property Office, the entire disclosures of which is incorporated herein by reference for all purposes.

### BACKGROUND

### 1. Field

The following description relates to an inventory management technology for managing a warehouse inventory and an in-store inventory in real time.

### 2. Description of the Related Art

When a product displayed on store shelves are sold out, a customer calls a staff member to see if there is inventory of the product. If there is inventory of the product, the staff member replenishes the product. However, if there is no inventory of the product, the customer may feel inconvenient and complain about it.

In a clothing store, a customer selects a specific product from among displayed items and rummages through the displayed items to find the specific product of desired size. If the product of desired size is sold out, the customer calls a staff member to see if there is inventory of the desired size. Although finally finding out a product of desired size after a long time, the customer may have a bad impression on the store because he/her has already spent too much time and made too much efforts.

In the existing Electronic Information Label (EIL) system, a management server transmits minimum information, such as product information and price, to an electronic label. However, the above mentioned problem cannot be avoided or addressed in the existing EIL system unless inventory information is displayed on the electronic label.

### SUMMARY

The following description relates to an inventory management apparatus and method, whose objective is to identify a location of a product in real time so as to replenish a product that is ready to be run out on a stand in a store.

In addition, the objective of the present disclosure is to quickly check whether a specific product is ready to be sold out, and control the result to be displayed on an electronic label so as to inform customers of whether the specific product is ready to be sold out.

Furthermore, the objective of the present disclosure is to provide an inventory management method using an Electronic Information Label (EIL) system.

In one general aspect, the inventory management apparatus is able to receive inventory information and product information from an external device. Using identification information of electronic labels respectively assigned to products, it is possible to be informed of a location of each product in real time. Based on a change on product inventory due to a change in a location of a product, it is possible to check the current product inventory accurately. An image frame, which includes inventory information, is generated and then transmitted through a gateway to an electronic label, so that the electronic label is able to display the image frame including the inventory information.

The inventory information may include a quantity of products stored in a warehouse and a quantity of products displayed on a stand inside a store.

Once an electronic label is assigned to a product, the inventory management apparatus may register the electronic label.

In response to a determination made based on product location information that a product has been moved from the warehouse to a stand inside the store, the inventory management apparatus may decrement a quantity of products stored in a warehouse and increment a quantity of products displayed on stands.

In response to a determination made based on product location information that a product exists inside a store but is not displayed on a stand, the inventory management apparatus may decrement a quantity of products displayed on stands.

In response to a determination made based on product location information that a product, once existing inside a store but not displayed on a stand, is now found on the stand, the inventory management apparatus may increment a quantity of products displayed on the stand.

Once assignment of an electronic label to a product is cancelled, the inventory management apparatus may cancel registration of the electronic label.

The inventory management apparatus may generate an image frame including inventory shortage warning message or sold-out information.

Other features and aspects may be apparent from the following detailed description, the drawings, and the claims.

### BRIEF DESCRIPTION OF THE DRAWINGS

FIG. 1 is a diagram illustrating a configuration of an electronic label management system according to an exemplary embodiment.
FIG. 2 is a block diagram illustrating a configuration of an inventory management apparatus according to an exemplary embodiment.
FIG. 3 is a flowchart illustrating a process in which an electronic label registers in a gateway and then updates product information according to an exemplary embodiment.
FIG. 4 is a diagram illustrating a screen of a small electronic label according to an exemplary embodiment.
FIG. 5 is a diagram illustrating a screen of a small electronic label according to another exemplary embodiment.
FIG. 6 is a diagram illustrating a screen of a large electronic label according to an exemplary embodiment.
FIG. 7 is a diagram illustrating a screen of a large electronic label according to another exemplary embodiment.
FIG. 8 is a flowchart illustrating an inventory management method according to an exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

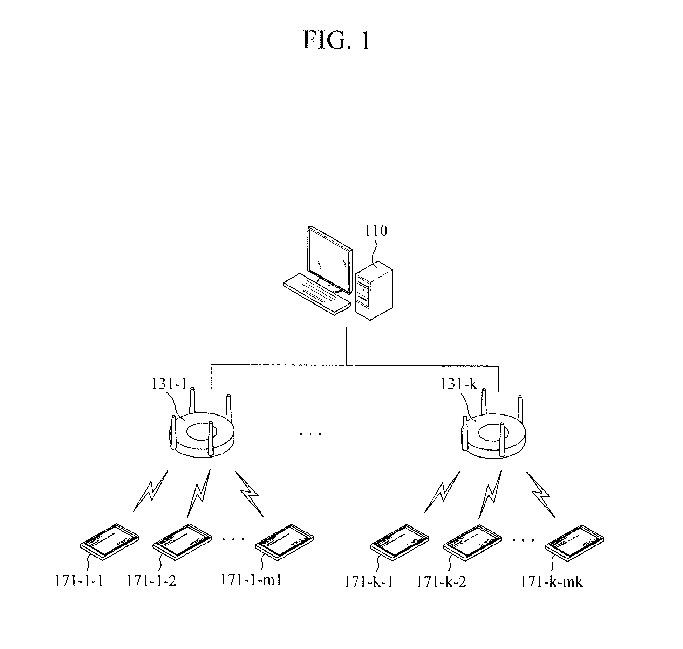

FIG. 1 is a diagram illustrating a configuration of an electronic label management system according to an exemplary embodiment. In one example, an electronic label management system includes: a management server 110; gateways 131-1,..., and131-k; and electronic labels 171-1-1,171-1-2,... ,171-1-ml,..., 171-k-1,171-k-2, ..., and 171-k-mk. The management server 110 provides product-related information, such as product name, price, and expiration date, which are to be displayed on the electronic labels 171-1-1,171-1-2,...,171-1-ml,..., 171-k-1,171-k-2,..., and171-k-mk. Each of the gateways 131-1,..., and 131-k is a wired/wireless converter and may be installed on the ceiling of a store.

The electronic labels 171-1-1,171-1-2,... ,171-1-ml,..., 171-k-1,171-k-2, ..., and 171-k-mk are managed by at least one group and updates product information. Being in a sleep mode to save battery power, the electronic labels 171-1-1,171-1-2,... ,171-1-ml,..., 171-k-1,171-k-2, ..., and 171-k-mk shift to a wake-up mode only in response to need for updating product information. In the electronic label management system according to an exemplary embodiment, a gateway communicates with an electronic label through Near Field Communication (NFC), for example, a protocol that is defined on a PHY/MAC layer in accordance with the IEEE 802.15.4 standard. The management server 110 transmits the product information through the gateway to electronic labels that are managed on group-by-group basis.

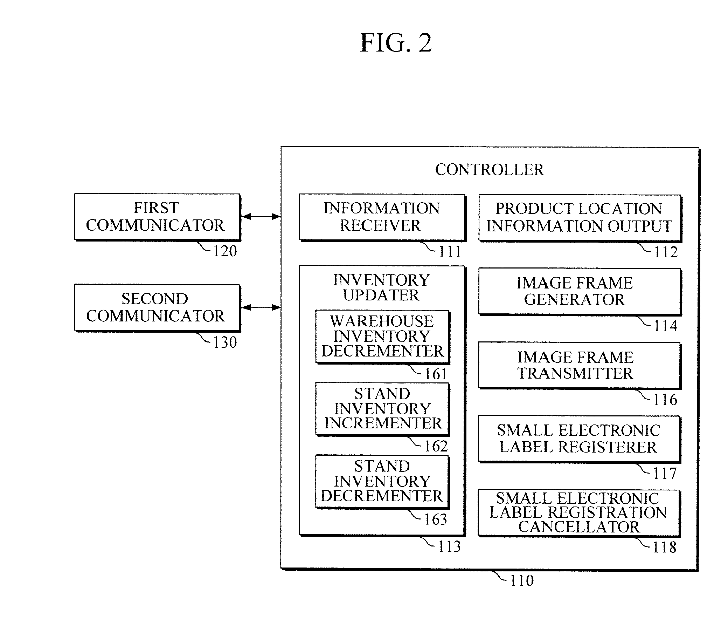

FIG. 2 is a block diagram illustrating a configuration of an inventory management apparatus according to an exemplary embodiment. An inventory management apparatus according to an exemplary embodiment includes a first communicator 120, a second communicator 130, and a controller 110. The first communicator 120 communicates with an external device. According to an exemplary embodiment, the external device may be a Point of Sales (POS) system that stores and manages product information and inventory information. The second communicator 130 communicates with a gateway through wired-communication using a cable or a communication line. The controller 110 controls operations of an inventory management apparatus.

The controller 110 includes a microprocessor and programs executed by the microprocessor. The controller 110 executes a program stored in a memory, for example, an application program that controls the inventory management apparatus. According to an exemplary embodiment, a product location information output component 112 and an inventory updater 113 may be embodied as an application program. However, it is apparent that the product location information output component 112 and the inventory updater 113 may be embodied as a combination of software and hardware or simply as hardware, for example, a dedicated logic.

The controller 110 may include an information receiver 111, the product location information output component 112, the inventory updater 113, an image frame generator 114, and an image frame transmitter 116.

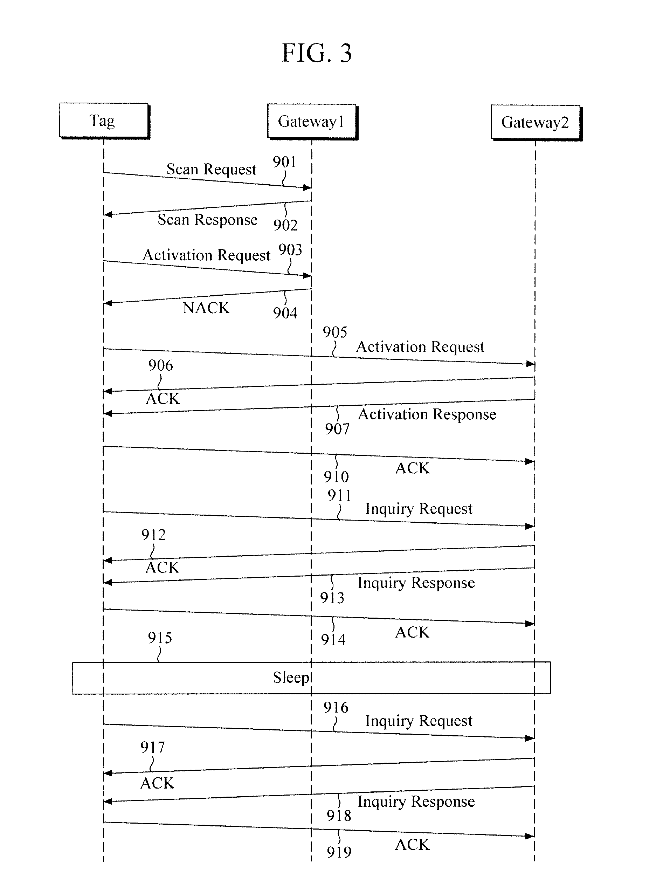

FIG. 3 is a flowchart illustrating a process in which an electronic label registers in a gateway and then updates product information. Moving from one channel to another channel in a predetermined sequence, the electronic label transmits a Scan Request signal to a gateway in 901. In response to receipt of the Scan Request signal, the gateway transmits a Scan Response signal to the electronic label in 902. Then, the electronic label transmits an Activation Request signal to the gateway in 903. In a case where an accumulated data amount, which is obtained by adding a data amount of an electronic label that has requested registration to a sum of data amounts of previously registered electronic labels, is greater than a reference value, the gateway transmits a Nack signal to the electronic label which has requesting registration in 904.

If the requested for registration is rejected, the electronic label transmits an Activation Request signal to a different gateway in 905. In a case where an accumulated data amount, which is obtained by adding a data amount of an electronic label that has requested registration to a sum of data amounts of previously registered electronic labels, is greater than a reference value, the different gateway transmits an Ack signal and an Activation Response signal to the electronic label which has requested registration in 906 and 907. Through operations 906 and 907, the electronic label registers in the different gateway that has transmitted the Ack signal and the Activation Response signal.

The product location information output component 112 receives identification information of a small electronic label from a gateway through the second communicator 130, and outputs product location information that is information on a location of a product assigned with the small electronic label. As shown in FIG. 3, after an electronic label registers in a gateway, the gateway acquires identification information, such as a Mac address, of the electronic label. In one embodiment, the gateway is installed inside both of a warehouse and a store, and, in response to receipt of identification information of a small electronic label from a gateway installed in the warehouse (hereinafter, referred to as a warehouse gateway), the product location information output component 112 outputs product location information indicating that a product assigned with the small electronic label is located inside the warehouse. In another embodiment, in response to receipt of identification information of a small electronic label from a gateway installed inside the store (hereinafter, referred to as a store gateway), the product location information output component 112 outputs product location information indicating that a product assigned with the small electronic label is located inside the store.

The inventory updater 113 updates inventory based on received inventory information according to the product location information output by the product location information output component 112. The inventory management apparatus receives product information and inventory information from the POS system. The POS system stores and manages the product information and the inventory information. If there is a change in inventory information, the POS system may transmit changed inventory information. For example, in a case where the inventory is replenished, where the inventory is run out due purchase, or where the inventory has increased as a purchased product is refunded, the POS system transmits changed inventory information to the inventory management apparatus. With an initial value set to be a quantity included in inventory information received from the POS system, warehouse inventory and in-store inventory are changed after the store is open. For example, if there is a shortage of products displayed on a stand, the products needs to be replenished, and, if a customer purchases one of the products, the products displayed on the stand may be decremented again. The inventory updater 113 updates inventory by determining whether there is a change in received inventory information according to product location information output by the product location output component 112.

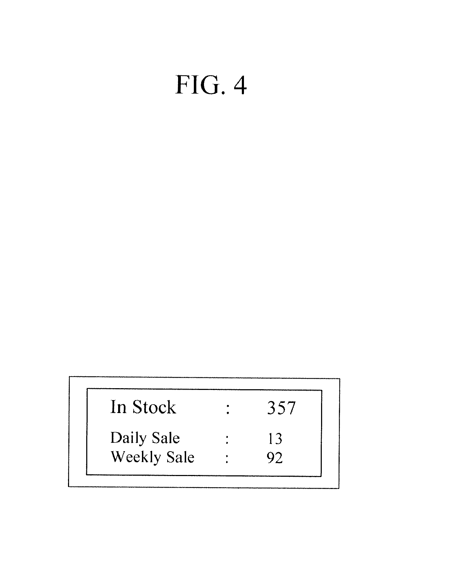

The image frame generator 1 14 generates an image frame including product information and inventory information. Specifically, the image frame generator 114 generates an image frame including product information and inventory information based on product information and inventory information received from the POS system or based on inventory updated by the inventory updater 113. The image frame transmitter 116 transmits the image frame to a gateway through the second communicator 130. According to an exemplary embodiment, the gateway transmits the received image frame to an electronic label, and the electronic label displays the received image frame. A display screen of the electronic label may be one of various display means, including an e-paper and a Liquid Crystal Display (LCD). FIG. 4 is a diagram illustrating a display screen of a small electronic label according to an exemplary embodiment. As the small electronic label displays inventory information, a floor manager may be informed of inventory in real time and thus enabled to manage the store more efficiently.

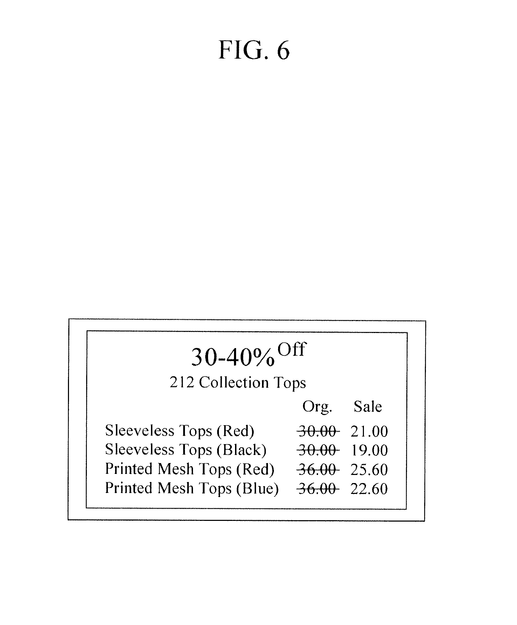

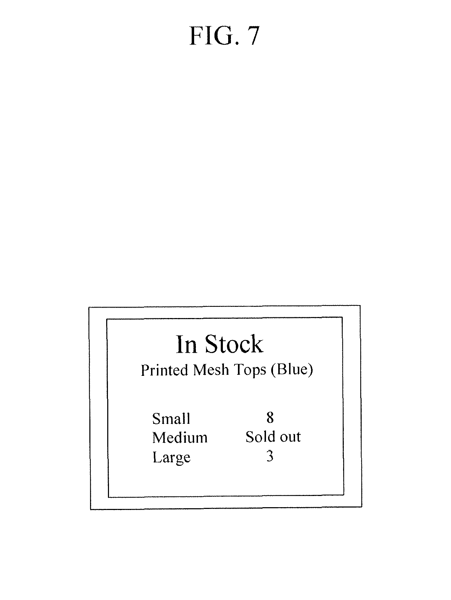

FIGS. 6 and 7 are diagrams illustrating a screen of a large electronic label according to an exemplary embodiment. A large electronic label may display product information on a display screen thereof. In response to a request for displaying inventory information, the large electronic label may convert a screen thereof to display the inventory information. The request for displaying inventory information may be input through an input means of a terminal or a portable terminal of a staff member. The portable terminal may include various types of devices, such as a remote controller and a Personal Digital Assistant (PDA), which are capable of transmitting data to an electronic label through wireless communication. In this case, various methods including infrared-ray communication, Radio Frequency Identification (RFID), and Near Field Communication (NFC), may be used for the wireless communication between the portable terminal and the electronic label. According to an exemplary embodiment, a small electronic label operates as a passive near field wireless tag (, e.g., an NFC tag and an RFID tag. In an example, if a large electronic label including an NFC or RFID reader tags a small electronic label, a display screen of the large electronic label displays an image frame that shows product information of a product which is assigned with the small electronic label.

According to one general aspect of the present disclosure, the inventory information includes the first quantity and the second quantity. The first quantity indicates a quantity of products stored in a warehouse (hereinafter, referred to warehouse inventory), and the second quantity indicates a quantity of products displayed on stands inside a store (hereinafter, referred to in-store inventory). By managing the warehouse inventory and the in-store inventory separately, a manager is able to know if the warehouse inventory is sufficient to replenish a product, right before the products displayed on a stand are run out. Informed of an in-store inventory, the manager may exclude a product existing in the store but not displayed on the stand, e.g., a product in a customer's shopping cart, from products that are available for purchase.

The controller 110 may include a small electronic label registerer 117. In response to receipt of assignment information of a small electronic label, the small electronic label registerer 117 registers the small electronic label based on identification information of the small electronic label and identification information of a product, each included in the assignment information. According to an exemplary embodiment, the inventory management apparatus receives, from a gateway, assignment information of a small electronic label registered in the gateway. In another embodiment, when a manager assigns a small electronic label to a specific product and transmits assignment information of the small electronic label to the POS system, the POS system transmits the assignment information to the inventory management apparatus. Then, based on the received assignment information, the inventory management apparatus registers the small electronic label and manages inventory information of the specific product. For example, based on identification information of products and identification information of small electronic labels, each of which is included in assignment information, the identification information of small electronic labels are managed on group-by-group basis in accordance with a product or product specifications, so that inventory information of products may be secured. Product specifications may be classified, for example, by type, size, color, and design of a product.

The inventory updater 113 may include an inventory decrementer 161. According to an exemplary embodiment, based on product location information received from the product location information output component 112, the inventory decrementer 161 determines that a product assigned with a small electronic label has been moved from a warehouse to a stand, and then decrements the first quantity in response to the determination. Based on a small electronic label's identification information received from a gateway installed in a warehouse (hereinafter, referred to as a warehouse gateway), the product location information output component 112 outputs product location information indicating that a product assigned with the small electronic label is located inside the warehouse. Then, if the warehouse gateway transmits, to the product location information output component 112, signal loss information indicating that a small electronic label has failed to receive a signal from the warehouse gateway), the product location information output component 112 outputs product location information indicating that a product assigned with the small electronic signal having failed to receive a signal does not exist in the warehouse any longer. The signal loss information includes identification information of the small electronic signal having failed to receive a signal, and product information of the product assigned with the small electronic label. When a gateway installed inside the store (hereinafter, referred to as a store gateway) transmits signal acquisition information indicating that a small electronic label has acquired a signal from the store gateway, the product location information output component 112 determines that a small electronic label newly registered in the store gateway is located inside the store. If the small electronic label having failed to receive a signal from the warehouse gateway has the same identification information of a small electronic label having acquired a signal from the store gateway, the inventory decrementer 161 determines that a product assigned with a small electronic label is moved from the warehouse to the store, and then decrements the first quantity.

According to an exemplary embodiment, a large electronic label is placed on every stand for the same product item, such as a dress or pants, to show inventory for each size, color, and specification of the same product item. The large electronic label wirelessly communicates with a small electronic label assigned or attached to a product item displayed on a stand. For the wireless communication, various methods including RFID and NFC Bluetooth Low Energy (BLE) may be used. NFC has a bandwidth of about 13.56MH and enables wireless communication within a distance of 10cm or less. An NFC tag has unique identification information, that is, an Electronic Product Code (EPC). According to an exemplary example, a large electronic label operates as an NFC reader, a small electronic label operates a NFC tag, and the two types of electronic labels performs NFC-type wireless communication to communicate with each other. RFID has a bandwidth of about 9000MHz and enables wireless communication within a distance of tens of centimeters. According to an exemplary embodiment, a large electronic label operates as an RFID reader, a small electronic label operates as an RFID tag, and the two types of electronic labels performs RFID-type wireless communication to communicate with each other. Bluetooth is a wireless technology standard for exchanging data over short distances using a frequency band of about 2.4GHz. BLE is a new protocol that has been developed to make simple connection included in the Bluetooth Core Specification Version 4.0 faster. According to an exemplary embodiment, a large electronic label operates as a Generic Attribute profile (GATT) client, a small electronic label operates as a GATT server, and the two types of the electronic labels performs BLE-type wireless communication to communicate with each other. If the inventory management apparatus receives a signal loss information indicating that a small electronic label has failed to receive a signal from a large electronic label, the product location information output component 112 determines that a product assigned with the small electronic label is not displayed on a stand.

If a small electronic label having failed to receive a signal from a warehouse gateway, a small electronic label having acquired a signal from a store gateway, and a small electronic label having acquired a signal from a large electronic label have the same identification information, the inventory decrementer 161 determines that a product assigned with a small electronic label has been moved from a warehouse to a stand in a store, and then decrements the first quantity in response to the determination.

The inventory updater 113 may include a stand inventory incrementer 162. Based on product location information received from the product location information output component 112, the stand inventory incrementer 162 determines that a product assigned with a small electronic label has been moved from a warehouse to a stand, and then increments the second quantity. Based on a small electronic label's identification information acquired from a warehouse gateway, the product location information output component 112 outputs product location information indicating that a product assigned with the small electronic label is located in a warehouse. Then, when a warehouse gateway transmits, to the inventory management apparatus, signal loss information indicating that the small electronic label has failed to receive a signal from the warehouse gateway, the product location information output component 112 outputs product location information indicating that a product assigned with the small electronic label having failed to receive a signal does not exist in the warehouse any longer. The signal loss information includes identification information of the small electronic label having failed to receive a signal, and product information of the product assigned with the small electronic label. When a store gateway transmits, to the inventory management apparatus, signal acquisition information indicating that the small electronic label has acquired a signal from the store gateway, the product location information output component 112 determines that a small electronic label newly registered in the store gateway exists in the store. If the small electronic label having failed to receive a signal from the warehouse gateway has the same identification information of the small electronic label having acquired a signal from the store gateway, the stand inventory incrementer 162 determines that a product assigned with a small electronic label has been moved from a warehouse to a store. In addition, the aforementioned small electronic label have the same identification information of a small electronic label having acquired a signal from a large electronic label, the stand inventory incrementer 162 determines that a product assigned with a small electronic label has been moved from the warehouse to a stand inside the store, and then increments the second quantity.

The inventory updater 113 includes an in-store inventory decrementer 163. Based on product location information received from the product location information output component 112, the in-store inventory decrementer 163 determines that a product assigned with a small electronic label exists inside a store but is not displayed on a stand, and then decrements the second quantity in response to the determination. If a small electronic label having acquired a signal from a store gateway has the same identification information of a small electronic label having failed to receive a signal from a large electronic label, the in-store inventory decrementer 163 determines that a product assigned with the small electronic label exists inside the store but is not displayed on a stand, and then decrements the second quantity. A gateway and a small electronic label communicate with each other by employing ZigBee that is a technology enabling wireless communication within a range between 10 meters and 100 meters. In a case where a radio frequency (RF) signal between the gateway and the small electronic label is maintained, a product assigned with the small electronic label may not be displayed on a stand. On the other hand, in a case where an RF signal is maintained between a large electronic label and a small electronic label, a determination may be made that a product assigned with the small electronic label is displayed on a stand. It is because the large electronic label and the small electronic label perform Near Field Communication (NFC) within a range of tens of centimeters (cm). Using a status of a signal between a gateway and a small electronic label and a status of signal between a large electronic label and a small electronic label, it is possible to exclude a product existing in the store but not displayed on a stand, e.g., a product in a shopping cart, from products that are available for purchase.

The inventory updater 113 may include a stand inventory incrementer 162. Based on product location information received from the product location information output component 112, the stand inventory incrementer 162 determines that a product, once existing in the store but not displayed on a stand, is now found on the stand, and then increments the second quantity in response to the determination. If a small electronic label having failed to receive a signal from a large electronic label has the same identification information of a small electronic label having acquired a signal from a large electronic label, the stand inventory incrementer 162 determines that a product assigned with a small electronic label and existing in the store but not on a stand is displayed again on a stand and then increments the second quantity. For example, in a case where a customer puts a product into a shopping cart but takes the product back to a stand, the stand inventory incrementer 162 increments the second quantity.

According to one general aspect of the present disclosure, the controller 110 may include a small electronic label registration cancellator 118. According to an exemplary embodiment, if receiving, from the first communicator 120, a request for cancellation of assignment of a small electronic label, the small electronic label registration cancellator 118 cancels assignment of the small electronic label based on identification information of the small electronic label and identification information of a product. In one example, the inventory management apparatus receives, from a gateway, assignment cancellation information of a small electronic label whose registration has been cancelled by the gateway. In another example, if a manager cancels assignment of a small electronic label to a product and transmits the assignment cancelation information to a POS system, the POS system transmits the assignment cancellation information to the inventory management apparatus. The inventory management apparatus may cancel registration of the small electronic label based on the assignment cancellation information, and then manage inventory information of the product. For example, based on identification information of products and identification information of small electronic labels, each of which is included in received assignment cancellation information, the inventory management apparatus manages the identification information of small electronic labels on group-by-group basis in accordance of a product or product specifications, so that inventory information of products may be secured. Product specifications may be classified, for example, into type, size, and design of a product. The assignment of a small electronic label be cancelled when, for example, a product assigned with the small electronic label is sold.

According to one general aspect of the present disclosure, the inventory management apparatus may receive inventory shortage warning information or sold-out information through the first communicator 120. If inventory is less than a predetermined amount, the POS system transmits inventory shortage warning information to the inventory management apparatus. If a product is sold out, the POS system transmits sold-out information to the inventory management apparatus. For example, based on information input by a staff member, the POS system determines whether a product is sold out.

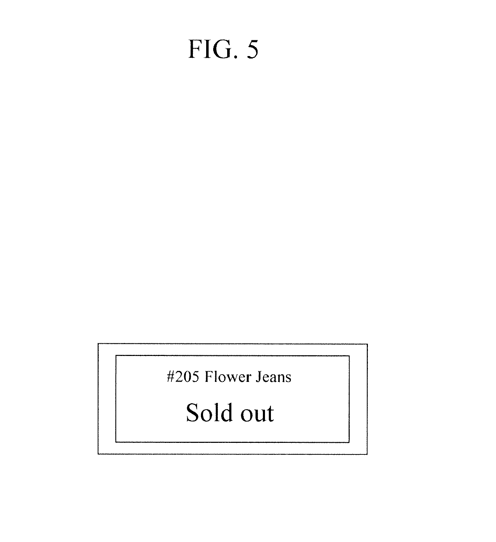

According to one general aspect of the present disclosure, the controller 110 may include an image frame generator 114. The image frame generator 114 generates an image frame including an inventory shortage warning message or a sold-out message. The image frame transmitter 116 transmits the generated image frame to a gateway through the second communicator 130. The gateway transmits the received image frame to an electronic label, and the electronic label stores and displays the received image frame. According to an exemplary embodiment, a display screen of the electronic label may be one of various display means, including an e-paper and an LCD. FIG. 5 is a diagram illustrating an example in which an electronic label displays a received image frame including sold-out information. As the electronic label displays inventory shortage warning information or sold-out information on a display screen thereof, a floor manager may be informed of a product's inventory easily and enabled to manage the store more efficiently.

According to one general aspect of the present disclosure, an inventory management method includes outputting product location information, updating inventory, generating an image frame, and transmitting an image frame. According to an exemplary embodiment, in the operation of outputting product location information, an inventory management apparatus receives identification information of a small electronic label and outputs product location information that is information on a location of a product assigned with the small electronic label. As described above with reference to FIG. 3, after an electronic label registers in a gateway, the gateway acquires identification information of the electronic label, such as a MAC address. According to an exemplary embodiment, based on a small electronic label's identification information acquired from a warehouse gateway, the inventory management apparatus outputs product location information indicating that a product assigned with the small electronic label is located inside a warehouse. According to another exemplary embodiment, based on a small electronic label's identification information acquired from a store gateway, the inventory management apparatus outputs product location information indicating that a product assigned with the small electronic label is located inside a store.

In the operation of updating an inventory, inventory is updated based on received inventory information according to product location information that is output in the operation of outputting product location information. Specifically, product information and inventory information is received from the POS system that stores and manages the product information and the inventory information. If there is a change in inventory information, the POS system may transmit changed inventory information. For example, in a case where the inventory is replenished, where the inventory is run out due to purchase, or where the inventory has increased as a purchased product is refunded, the POS system may transmit changed inventory information. With an initial value set to be a quantity included in inventory information received from the POS system, a warehouse inventory and an in-store inventory are changed after the store is open. For example, if there is shortage of products displayed on stands, the products need to be replenished, and, if a customer purchases one of the products, the products displayed on the stands are decremented again. The inventory updater 113 updates inventory by determining whether there is a change in the received inventory information according to product location information output by the product location output component 112.

In the operation of generating an image frame, the inventory management apparatus generates an image frame including product information and inventory information. In the operation of generating an image frame, the inventory management apparatus generates an image frame including product information and inventory information based on product information and inventory information received from the POS system or based on inventory updated by the inventory updater 113. According to an exemplary embodiment, an image frame is transmitted to a gateway. The gateway transmits the received image frame to an electronic label, and the electronic label displays the received image frame.

According to one general aspect of the present disclosure, the inventory information includes first quantity and the second quantity. The first quantity indicates a quantity of products stored in a warehouse (that is, warehouse inventory), and the second quantity indicates a quantity of products displayed on stands in the store (that is, in-store inventory). By managing a warehouse inventory and an in-store inventory separately, a manager is able to know if the warehouse inventory is sufficient to replenish a product, right before the product, which is being displayed on a stand, is run out. Informed of an in-store inventory, the manager is able to exclude a product existing in the store but not displayed on a stand, e.g., a product in a customer's shopping cart, from products that are available for purchase.

According to one general aspect of the present disclosure, the inventory management method may further include an operation of registering a small electronic label. In the operation of registering a small electronic label, in receipt of assignment information of a small electronic label, the inventory management apparatus registers the small electronic label based on identification information of the small electronic label and identification information of a product, each included in the assignment information. According to an exemplary embodiment, the inventory management apparatus receives, from a gateway, assignment information of a small electronic label registered in the gateway. According to another exemplary embodiment, if a manager assigns a small electronic label to a specific product and transmits assignment information of the small electronic label to the POS system, the POS system transmits the assignment information of the small electronic label. In the inventory management method, the inventory management apparatus is able to register a small electronic label and manage inventory information of a product. For example, based on identification information of a small electronic label and identification information of a product, each included in assignment information, the inventory management apparatus manages identification information of all small electronic labels on group-by-group basis in accordance of a product or product specifications. Product specifications may be classified, for example, by a kind, size, color, and design of a product.

According to one general aspect, the operation of updating inventory may include an operation of decrementing warehouse inventory. In the operation of decrementing warehouse inventory, it is possible to determine, based on product location information, which is output in the operation of outputting product location information, that a product assigned with a small electronic label has been moved from a warehouse to a stand, and to decrement the first quantity. Specifically, using an electronic label's identification information received from a warehouse gateway, product location information indicating that a product assigned with the small electronic label is located inside the warehouse is output. Then, if the warehouse gateway transmits, to the inventory management apparatus, signal loss information indicating that the small electronic label has failed to receive a signal from the warehouse gateway, product location information is output, which indicates that the product assigned with the small electronic label having failed to receive a signal does not exist inside the warehouse any longer. Signal loss information includes identification information of a small electronic label having failed to receive a signal, and product information of a product assigned with the small electronic label. If a store gateway transmits, to the inventory management apparatus, signal acquisition information indicating that a small electronic label has acquired a signal from the store gateway, a determination is made that a small electronic label newly registered in the store gateway is located inside the store. If the small electronic label having failed to receive a signal from the warehouse gateway have the same identification information of a small electronic label having acquired a signal from the store gateway, the warehouse inventory decrementer 161 determines that a product assigned with a small electronic label has been moved from the warehouse to a store, and then decrements the first quantity.

According to an exemplary embodiment, in the operation of decrementing warehouse inventory, if a small electronic label having failed to receive a signal from the warehouse gateway, a small electronic label having acquired a signal from the store gateway, and a small electronic label having acquired from a large electronic label have the same identification information, the inventory management apparatus determines that a products assigned with a small electronic label has been moved from a warehouse to a stand, and then decrements the first quantity.

According to one general aspect, the operation of updating inventory may include an operation of incrementing in-store inventory. In the operation of incrementing in-store inventory, based on product location information received in the operation of outputting product location information, a determination is made that a product assigned with a small electronic label has been moved from a warehouse to a stand, and the second quantity is incremented. In the operation of outputting product location information, based on a small electronic label's identification information received from a warehouse gateway, product location information indicating that a product assigned with the small electronic label is located inside the warehouse is output. Then, if the warehouse gateway transmits, to the inventory management apparatus, signal loss information indicating that a small electronic label has failed to receive a signal the warehouse gateway, product location information indicating indicates that a product assigned with the small electronic label having failed to receive the signal does not exist in the warehouse any longer is output. Signal loss information includes identification information of a small electronic label having failed to receive a signal, and product information of a product assigned with the small electronic label. If a store gateway transmits, to the inventory management apparatus, signal acquisition information indicating that a small electronic label has acquired a signal from the store gateway, a determination is made that a small electronic label newly registered with the store gateway is located inside the store. If a small electronic label having failed to receive a signal from the warehouse gateway and a small electronic label having acquired a signal from the store gateway have the same identification information, a determination is made that a products assigned with a small electronic label has been moved from the warehouse to the store. If the same identification information is identical to that of a small electronic label having acquired a signal from a large electronic label, a determination is made that a product assigned with a small electronic label has been moved from the warehouse to a stand, and then the second quantity is incremented.

According to one general aspect, the operation of updating inventory may include an operation of decrementing in-store inventory. In the operation of decrementing in-store inventory, based on product location information received in the operation of outputting product location information, a determination is made that a product assigned with a small electronic label exists in a store but is not displayed on a stand, and then the second quantity is decremented in response to the determination. Specifically, if a small electronic label having acquired a signal from a store gateway has the same identification information of a small electronic label having failed to receive a signal from a large electronic label, a determination is made that a product assigned with a small electronic label exists in the store but is not displayed on a stand, and then the second quantity is decremented. A gateway and a small electronic label communicates with each other by employing ZigBee that is a technology enabling wireless communication within tens of meters. Even in a case where an RF signal is maintained between a gateway and a small electronic label, a product assigned with the small electronic label may not be displayed on a stand. On the other hand, in a case where an RF signal is maintained between a small electronic label and a large electronic label, it is possible to determine that a product assigned with the small electronic label is displayed on a stand. It is because the small electronic label and the large electronic label performs NFC within a range of tens of centimeters. Based on a status of a signal between a gateway and a small electronic label and a status of a signal between a small electronic label and a large electronic label, it is possible to exclude a product existing in the store but not displayed on a stand, e.g., a product inside a customer's shopping cart, from products that are available for purchase.

According to one general aspect, the operation of updating inventory may include an operation of incrementing in-store inventory. In one embodiment, based on product location information received in the operation of outputting product location information, a determination is made that a product, once existing in the store but not displayed on a stand, is now found on the stand, and then the second quantity is incremented. If a small electronic label having failed to receive a signal from a large electronic label has the same identification information of the small electronic label having acquired a signal from the large electronic label, a determination is made that a product, once existing in the store but not displayed on a stand, is now found on the stand, and the second quantity is incremented. For example, in a case where a customer takes a product in a shopping cart back to a stand, the stand inventory incrementer 162 increments the second quantity.

According to one general aspect of the present disclosure, the inventory management method may include an operation of canceling registration of a small electronic label. In this operation, if assignment cancellation information of a small electronic label is received, the inventory management apparatus cancels registration of the small electronic label based on identification information of the small electronic label and identification information of a product, each included in the assignment cancellation information. In one embodiment, assignment cancellation information of a small electronic label whose registration is canceled by a gateway is received from the gateway. In another embodiment, if a manager cancels assignment of a small electronic label to a product and assignment cancellation information of the small electronic label to the POS system, the POS system transmits the assignment cancellation information of the small electronic label. In the inventory management method, it is possible to cancel registration of the small electronic label and manage inventory information of a product, based on the received assignment cancellation information. For example, based on identification information of products and identification information of small electronic labels, each of which is included in assignment cancellation information, the identification information of small electronic labels are managed on group-by-group basis in accordance with a product or product specifications, so that inventory information of products may be secured. The product specifications may be classified, for example, into type, size, color, and design of a product. The assignment of a small electronic label may be cancelled, for example, in a case where a product assigned with the small electronic label is sold.

According to one general aspect of the present disclosure, the inventory management method includes an operation of receiving inventory shortage warning information and sold-out information. In one embodiment, if the inventory is less than a predetermined amount, inventory shortage warning information is received from the POS system. In another embodiment, if the inventory is sold out, sold-out information is received from the POS system. For example, based on information input by a staff member, the POS system determines whether a product is sold out.

According to one general aspect of the present disclosure, the inventory management method may include an operation of generating an image frame. In one embodiment, an image frame including inventory shortage warning information or sold-out information is generated in the operation of generating an image frame. In an operation of transmitting an image frame, an image frame generated by the image frame generator 114 is transmitted to a gateway. The gateway transmits the received image frame to an electronic label, and the electronic label stores and displays the received image frame.

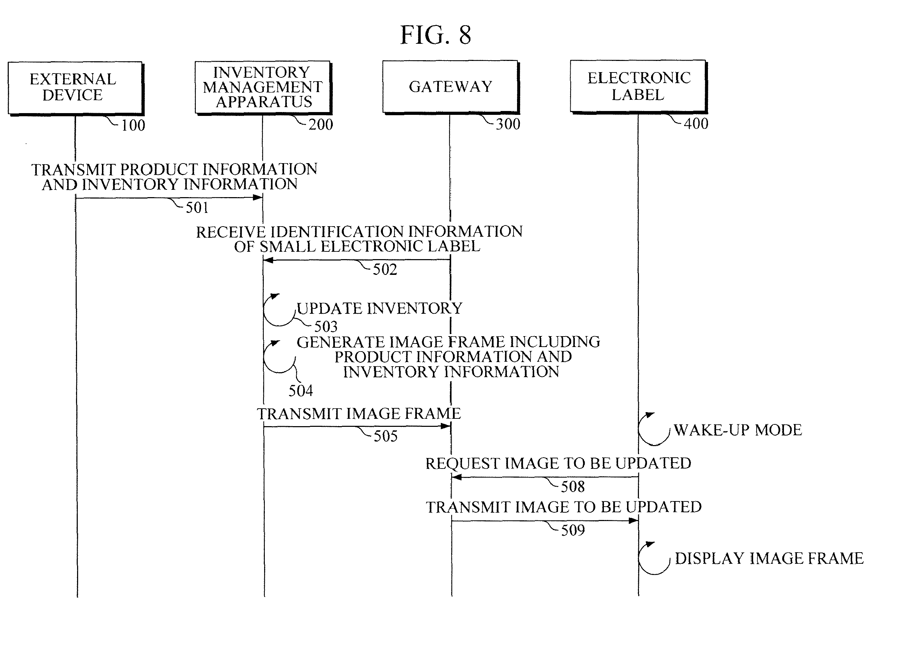

FIG. 8 is a flowchart illustrating an inventory management method according to an exemplary embodiment. An external device 100 transmits product information and inventory information to an inventory management apparatus 200 in 501. According to an exemplary embodiment, the external device 100 may be a POS system that stores and manages product information and inventory information. When there is a change in inventory information, the POS system may transmit changed inventory information to the inventory management apparatus 200. A gateway 300 transmits identification information of a small electronic label 400 to the inventory management apparatus 200 in 502. Based on the description provided above with reference to FIG. 3, when the small electronic label 400 registers in the gateway 300, the gateway 300 acquires identification information of the small electronic label 400, such as a MAC address. The gateway 300 transmits the identification information of the small electronic label 400 to the inventory management apparatus 200. In 503, the gateway 300 updates inventory based on received inventory information according to product location information output by a product location information output component. With an initial value set to be a quantity included in inventory information received from the POS system, a warehouse inventory and an in-store inventory are changed after the store is open. An inventory updater updates inventory by determining whether there is a change in inventory information according to product location information output by the product location output component. The inventory management apparatus 200 generates an image frame including product information and inventory information in 504. Specifically, the inventory management apparatus 200 generates an image frame based on product information and inventory information received from the POS system or based on inventory updated by the inventory updater. The inventory management apparatus 200 transmits the image frame to the gateway 300 in 505. Being in a sleep mode in 506 to save battery consumption, the electronic label 400 wake up at predetermined time intervals in 507. In 508, the electronic label 400, which has wake up, transmits, to the gateway, a signal that requests an image frame to be updated. The gateway 300 transmits, to the electronic label 400, the image frame received from the inventory management apparatus 200 in 509. The electronic label 400 displays the received image frame in 510. However, the aforementioned sequence of operations 501 to 508 may be changed.

The present disclosure allows a staff member to check in-store inventory easily and conveniently, thereby improving efficiency in managing inventory.

In addition, the present disclosure allows a staff member to be informed of locations of products in real time, so that products about to be sold out may be replenished immediately. Therefore, customers may be immediately informed of whether a specific product is run out.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An inventory management apparatus which transmits, through a gateway, product information to be displayed on an electronic label, the apparatus comprising:
a first communicator configured to communicate with an external device;
a second communicator configured to perform wired communication with the gateway;
a product location information output configured to receive identification information of a small electronic label from the gateway through the second communicator and output product location information of a product assigned with the small electronic label; and
a controller configured to comprises
an inventory updater configured to update inventory based on inventory information, which is received from the first communicator, according to the product location information output by the product location information output;
an image frame generator configured to generate an image frame that comprises product information and the inventory information; and
an image frame transmitter configured to transmit the image frame through the second communicator to the gateway.

2. The inventory management apparatus of claim 1, wherein the inventory comprises a first quantity indicating a quantity of products stored in a warehouse, and a second quantity indicating a quantity of products displayed on a stand.

3. The inventory management apparatus of claim 2, wherein the inventory updater is further configured to comprise a warehouse inventory decrementer configured to determine, based on the product location information received from the product location information output, that the product assigned with the small electronic label has been moved from a warehouse to a stand, and decrement the first quantity.

4. The inventory management apparatus of claim 2, wherein the inventory updater is further configured to comprise an stand inventory incrementer configured to determine, based on the product location information received from the product location information output, that determine that the product assigned with the small electronic label has been moved from a warehouse to a stand, and increment the second quantity.

5. The inventory management apparatus of claim 2, wherein the inventory updater is further configured to determine, based on the product location information received from the product location information output, that the product assigned with the small electronic label exists in a store but is not displayed on the stand, and then decrement the second quantity.

6. The inventory management apparatus of claim 5, wherein the stand inventory incrementer is further configured to determine, based on the product location information received from the product location information output, that the product, once existing in the store but not displayed on a stand, is now found on the stand, and increment the second quantity.

7. The inventory management apparatus of claim 1, wherein the product location information output is further configured to output the product location information using a status of Zigbee communication signal between the gateway and the small electronic label and using a status of any one of a Near Field Communication (NFC) signal, a Radio Frequency Identification (RFID) signal, and a Bluetooth Low Energy (BLE) signal.

8. The inventory management apparatus of claim 1, wherein the inventory management apparatus is configured to receive an inventory shortage warning information or sold-out information through the first communicator, and the image frame generator is further configured to generate an image frame containing the inventory shortage warning information or the sold-out information.

9. An inventory management method comprising:
receiving product information and inventory information;
receiving identification information of a small electronic label and outputting product location information that is information on a location of a product assigned with the small electronic label;
updating inventory based on the inventory information according to the product location information;
generating an image frame that comprises the product information and the inventory information; and
transmitting the image frame to a gateway.

10. The inventory management method of claim 9, wherein the inventory information comprises a first quantity indicating a quantity of products stored in a warehouse, and a second quantity indicating a quantity of products displayed on stands in a store.

11. The inventory management method of claim 9, wherein the updating of inventory comprises decrementing warehouse inventory by determining, based on the product location information, that the product assigned with the small electronic label has been moved from a warehouse to a stand, and decrementing the first quantity in response to the determination.

12. The inventory management method of claim 10, wherein the updating of inventory comprises incrementing in-store inventory by determining, based on the product location information, that the product assigned with the small electronic label has been moved from a warehouse to a stand, and incrementing the second quantity in response to the determination.

13. The inventory management method of claim 10, wherein the updating of inventory comprises decrementing in-store inventory by determining, based on the product location information, that the product assigned with the small electronic label exists in a store but is not displayed on a stand, and decrementing the second quantity in response to the determination.

14. The inventory management method of claim 13, wherein the incrementing of in-store inventory comprises determining, based on the product location information, that the product, once existing in the store but not displayed on the stand, is not found on the stand, and incrementing the second quantity in response to the determination.

15. The inventory management method of claim 9, wherein the receiving of product information and inventory information comprises receiving inventory shortage warning information or sold-out information, and the generating of an image frame comprises an image frame that comprises the inventory shortage warning information or the sold-out information.
